# EUROPÄISCHE PATENTSCHRIFT

(11) **EP 3 157 138 B1**
(45) Veröffentlichungstag und Bekanntmachung des Hinweises auf die Patenterteilung: **25.07.2018**
(21) Anmeldenummer: 15189357.5
(22) Anmeldetag: 12.10.2015
(51) Int. Cl.: H02K 1/20, H02K 1/32

(54) **VERFAHREN ZUR KÜHLUNG EINES BLECHPAKETS, BLECHPAKET, ROTOR, STATOR UND ELEKTRISCHE MASCHINE**
METHOD FOR COOLING A STACK OF METAL SHEETS, STACK OF METAL SHEETS, ROTOR, STATOR AND ELECTRIC MACHINE
PROCEDE DE REFROIDISSEMENT D'UN PAQUET DE TOLES, PAQUET DE TOLES, ROTOR, STATOR ET MACHINE ELECTRIQUE

(43) Veröffentlichungstag der Anmeldung: 19.04.2017
(73) Patentinhaber: Siemens Aktiengesellschaft, 80333 München (DE)
(72) Erfinder: Rogginger, Christoph, 84384 Wittibreut (DE); Junge, Martin, 94481 Grafenau (DE); Winkler, Günther, 4785 Haibach (AT)

(56) Entgegenhaltungen:
- EP-A1- 0 155 405
- EP-A2- 2 463 991
- WO-A1-2013/170883
- DE-A1- 3 334 501

## Beschreibung

Die Erfindung betrifft ein Verfahren zur Kühlung eines Blechpakets und ein Blechpaket. Weiter betrifft die Erfindung einen Rotor, einen Stator und eine elektrische Maschine.

Elektrische Maschinen weisen meist Blechpakete zur Aufnahme von Spulen auf, wobei die Spulen in stromdurchflossenem Zustand ein Magnetfeld erzeugen. Zur Vermeidung von magnetischen Wirbelfeldern ist die Spule dabei meist einem Blechpaket zugeordnet.

Aufgrund von elektrischen Verlusten und magnetischen Wirbelfeldern erwärmt sich ein solches Blechpaket und muss daher bei einem lang andauernden Betrieb gekühlt werden. Zur Kühlung eines Blechpaketes werden die Blechpakete mit Kühlkanäle versehen, wobei durch die Kühlkanäle ein Kühlmedium läuft. Durch die Kühlkanäle wird die entstehende Wärme aufgenommen. Nachteilig tritt die Erwärmung des Blechpaketes insbesondere in Bereichen des Blechpakets auf, in denen die Spulen lokalisiert sind. Regelmäßig sind diese Bereiche jedoch nicht von Kühlkanälen durchsetzt. Diese Bereiche werden auch als Zahnbereiche des Blechpaketes bezeichnet.

DE 10 2011 056 007 A1 beschreibt zur Verbesserung ein Blechpaket, das aus mehreren Teilblechpaketen besteht, wobei die Teilblechpakete definiert beabstandet sind. Die Teilblechpakete werden einzeln von dem Kühlmedium durchströmt. Diese konstruktive Ausgestaltung verbessert die Kühlleistung einer elektrischen Maschine bei einer nur geringen Gewichtzunahme.

DE 33 34 501 A1 offenbart ebenfalls ein Blechpaket für eine elektrische Maschine. Hier formen Aussparungen in so genannten Kernblechen Kühlkanäle aus.

Es ist Aufgabe der Erfindung, die Kühlung eines Blechpakets, insbesondere einer elektrischen Maschine, weiter zu verbessern.

Die Aufgabe wird durch ein Blechpaket gemäß Anspruch 1 gelöst.

Die Aufgabe wird weiter durch ein Verfahren zur Kühlung eines Blechpakets nach Anspruch 10 gelöst.

Die Aufgabe wird weiter durch einen Rotor oder einen Stator mit einem solchen Blechpaket sowie durch eine elektrische Maschine mit einem solchen Blechpaket gelöst.

Weitere vorteilhafte Ausgestaltungen und Weiterentwicklungen des Blechpakets und des Verfahrens zur Kühlung eines Blechpakets sind Gegenstand der abhängigen Ansprüche.

Das Blechpaket ist aus Blechen und/oder Blechsegmenten zusammengesetzt, wobei das oben beschriebene Blechpaket eine Vielzahl von gleichen Blechen oder Blechsegmenten aufweist. Im Folgenden weisen Bleche die Profilform des Blechpakets auf. Blechsegmente weisen die Form eines Teils der Profilform des Blechpaketes auf. Blechsegmente können je nach Größe des Blechpakets insbesondere die Form eines Viertel-Kreisringes oder eines Halb-Kreisringes aufweisen, wobei die Profilform des Blechpakets aus den Blechsegmenten demnach die Form eines Kreisringes aufweist. Die Blechsegmente decken, nebeneinander angeordnet, das Profil des Blechpakets oder das Profil der Bleche ab.

Im Folgenden werden Blechsegmente ebenfalls als Bleche bezeichnet, obgleich diese nur teilweise das Profil abbilden. Die Aufteilung von Bleche in Blechsegmente wird vorteilhaft zur vereinfachten Herstellung des Blechpakets vorgenommen.

Die Bleche bzw. die Blechsegmente sind vorzugsweise bereichsweise tangential aufeinander versetzt angeordnet. Ein Blech ist weist meist eine Dicke im Millimeterbereich auf. Damit die hier beschriebenen Aussparungen Kanäle mit ausreichenden Ausmaßen bilden können, sind jeweils mehrere Bleche so aufeinander positioniert, dass deren Aussparungen sich aufeinander befinden. Die deckungsgleich aufeinander befindlichen Bleche oder Blechsegmente werden hier als Ensemble bezeichnet. Die Ensembles, bestehend aus mehreren aufeinander aufliegenden Blechen (und/oder Blechsegmente), werden dann tangential versetzt zu dem Blechpaket zusammengefügt.

Das Blechpaket und die Bleche bzw. die Blechsegmente weisen Zähne auf, wobei magnetische Bauteile, insbesondere Spulen und Permanentmagnete, in den Zwischenräumen der Zähne angeordnet sind. Der Bereich des Blechpakets oder der Bleche wird oft als Zahnbereich bezeichnet. Im Zahnbereich sind die magnetischen Bauteile eingefasst. Das Blechpaket weist weiter einen massiven Bereich auf, der gelegentlich auch als Jochbereich bezeichnet wird. Der Jochbereich befindet sich regelmäßig im äußeren radialen Bereich des Blechpakets. Der Jochbereich grenzt radial von außen an den Zahnbereich an.

Im Rahmen der hier beschriebenen Erfindung dienen Zulaufkanäle zur Versorgung und Verteilung eines Kühlmediums zu den Zahnzulaufkanälen. Die Zulaufkanäle verlaufen vorteilhaft im Jochbereich des Blechpakets.

Die Zahnzulaufkanäle dienen zum Transport des Kühlmediums von den Zulaufkanälen in die Zahnzwischenkanäle. Die Zahnzwischenkanäle sind im Zahnbereich des Blechpakets angeordnet. Vorzugsweise befinden sich die Zahnzwischenkanäle zwischen den Spulen, wo das Kühlmedium die von den Spulen abgegebene Wärme aufnimmt.

Die Zahnrücklaufkanäle dienen zur Überführung des erwärmten Kühlmediums aus den Zahnzwischenkanälen zu den Rücklaufkanälen. Die Rücklaufkanäle dienen zur Aufnahme des erwärmten Kühlmediums sowie zum Transport des Kühlmediums aus dem Blechpaket hinaus.

Vorteilhaft befinden sich die Zulaufkanäle und die Rücklaufkanäle in dem äußeren radialen Bereich des Blechpakets. Vorteilhaft dienen die Zahnzwischenkanäle, die Zahnzulaufkanäle sowie die Zahnrücklaufkanäle zur Kühlung der Zähne. Zur Kühlung der Zähne sind die Zahnzulaufkanäle, die Zahnrücklaufkanäle und die Zahnzwischenkanäle zumindest bereichsweise in den Zähnen angeordnet. Durch die Anordnung der Zahnzwischenkanäle, den Zahnzulaufkanäle und der Zahnrücklaufkanäle im Zahnbereich des Blechpakets sind die Wege für die überschüssige Wärme durch das Blechpaket kurz. Durch die kurzen Wege für die Wärme ist eine schnelle und effiziente Kühlung des Blechpaktes gegeben.

Die Kühlkanäle sind durch ein aufeinander-positionieren von Aussparungen der Bleche gebildet. Die Aussparungen bilden je nach Position und Form die unterschiedlichen Kanäle: Die Zulaufkanalabschnitte bilden bei aufeinander-Positionierung die Zulaufkanäle, die Zahnzwischenkanalabschnitte bilden bei aufeinander-Positionierung die Zahnzwischenkanäle. Dementsprechend werden die weiteren entsprechenden Kühlkanäle im Blechpaket durch die entsprechenden dafür vorgesehene Abschnitte gebildet.

Bei dicken Blechen oder Blechsegmenten (Dicke ab 5 mm) kann auch einer dieser Abschnitte einen Zahnzulaufkanal, einen Zahnzwischenkanal oder einen Zahnrücklaufkanal bilden. Einzelne Bleche entsprechen somit im Rahmen der Erfindung die o. g. Ensemble.

Ein Aspekt der Erfindung ist die gleiche Form der einzelnen Bleche oder Blechsegmente, so dass diese lediglich in ihrer Ausrichtung bzw. tangentialen Position versetzt aufeinander angeordnet werden, um die oben genannten Kanäle im Inneren des Blechpakets auszubilden.

Bei einer gleichmäßigen Verteilung der Zahnzwischenkanäle, der Zahnzulaufkanäle und der Zahnrücklaufkanäle auf die Zähne ist eine hohe Stabilität des Blechpakets gegeben. Besonders vorteilhaft ist, dass die Kühlung des Blechpakets besonders gleichmäßig ist, so dass mechanische Spannungen innerhalb des Blechpakets minimiert werden.

Je weiter die Zahnzulaufkanäle, die Zahnrücklaufkanäle und die Zahnzwischenkanäle in die Zähne hineinragen, desto besser ist die Kühlung der Zähne des Blechpakets. Daher sind vorteilhaft die Zahnzwischenkanäle nahe der Enden der Zähne lokalisiert. Erfindungsgemäß sind der Zulaufkanal und der Rücklaufkanal, sowie optional der Zahnzwischenkanal, axial durch das Blechpaket angeordnet.

Die Zulaufkanäle und die Rücklaufkanäle sind im äußeren Randbereich des Blechpakets angeordnet. Die Zulaufkanäle laufen vorteilhaft in axialer Richtung durch das Blechpaket. Durch die axiale Anordnung der Zulaufkanäle und der Rücklaufkanäle treten vorteilhaft kaum Unebenheiten innerhalb der Zulauf-/Rücklaufkanäle auf. Vorteilhaft setzen sich somit Fremdstoffe nur stark erschwert an den Innenflächen der Kühlkanäle ab. Vorteilhaft verlaufen auch die Zahnzwischenkanäle in axialer Richtung durch die Zähne. Da die Zähne ebenfalls in axiale Richtung verlaufen, passen sich die Zahnzwischenkanäle an. Durch den axialen Verlauf der Zulaufkanäle, der Rücklaufkanäle und optional der Zahnzwischenkanäle ist die Stabilität des Blechpakets durch die Aussparungen in den Blechen nur minimal beeinflusst.

Bei einer weiteren vorteilhaften Ausgestaltung des Blechpakets sind die Zahnzulaufkanäle und die Zahnrücklaufkanäle zumindest teilweise in radialer Richtung angeordnet.

Der Zahnzulaufkanal und der der Zahnrücklaufkanal verlaufen vorteilhaft von dem entsprechenden Zulaufkanal oder Rücklaufkanal bis in den Zahnbereich. Durch den radialen Verlauf der Zahnzulaufkanäle und der Zahnrücklaufkanäle ist vorteilhaft die Stabilität des Blechpakets nur geringfügig beeinflusst.

Durch die radiale Anordnung der o. g. Kanäle gelangt das Kühlmedium schnell vom Jochbereich des Blechpakets zum Zahnbereich des Blechpakets und wieder zurück. Somit ist eine besonders gute Kühlung des Blechpakets möglich.
In einer weiteren vorteilhaften Ausgestaltung des Blechpakets sind die Zulaufkanäle und/oder die Rücklaufkanäle parallel angeordnet.

Zur Verbesserung der Verbindung beider Kanäle sind die Zulaufkanäle und die Rücklaufkanäle parallel und jeweils benachbart angeordnet. Die Anordnung erfolgt dabei dergestalt, dass jeweils ein Zulaufkanal und ein Rücklaufkanal einander benachbart sind. So ist eine Verbindung der Zulaufkanäle und der Rücklaufkanäle außerhalb des Blechpakets in besonders einfacher Art und Weise möglich. Vorteilhaft sind die Abstände zwischen den einzelnen Rücklaufkanälen und/oder Zulaufkanälen einheitlich. Durch diese Maßnahme ist es möglich, nur eine Form für alle Bleche für den Aufbau des gesamten Blechpakets zu verwenden.

In einer weiteren vorteilhaften Ausgestaltung des Blechpakets weist das Blechpaket Zahnbereiche auf, wobei die Zahnzulaufkanäle, die Zahnrücklaufkanäle sowie optional die Zahnzwischenkanäle zumindest bereichsweise in den Zahnbereichen lokalisiert sind.

Gewöhnlich erwärmt sich das Blechpaket aufgrund von Verlusten bei stromdurchflossenen Spulen. Die Zahnbereiche geben zwar die dort entstehende Wärmeenergie an den Jochbereich des Blechpakets ab, jedoch ist der Wärmestrom aufgrund der begrenzten Wärmeleitfähigkeit des Blechpakets gering. Somit trägt eine gezielte Kühlung der Zahnbereiche des Blechpakets zu einer erhöhten Leistungsfähigkeit der elektrischen Maschine bei. Zu diesem Zweck sind die Zahnzwischenkanäle im Bereich zwischen den Spulen, also vollständig zwischen den Zähnen angeordnet. Die Zahnzulaufkanäle und die Zahnrücklaufkanäle dienen ebenfalls zur Kühlung des Zahnbereiches des Blechpakets, da diese zumindest zum Teil im Zahnbereich verlaufen.

In einer weiteren vorteilhaften Ausgestaltung weist Blechpaket einen Jochbereich auf, wobei die Zulaufkanäle und die Rücklaufkanäle in dem Jochbereich lokalisiert sind.

Der Jochbereich des Blechpakets ist gewöhnlich am äußeren Bereich des Blechpakets lokalisiert. Der Jochbereich des Blechpakets ist meist massiv ausgestaltet und erhöht somit die Festigkeit des Blechpakets. Durch die massive Bauweise des Blechpakets wird die Festigkeit des Blechpakets durch Aussparungen der Bleche oder selbst durch eine Mehrzahl von Zulaufkanälen oder Rücklaufkanälen nur minimal beeinflusst. Zudem liegen die Eingänge bzw. Ausgänge der Zulaufkanälen/Rücklaufkanälen an den Stirnseiten des Blechpakets.

In einer weiteren vorteilhaften Ausgestaltung des Blechpakets sind die Dicken der Bleche so gewählt, dass der Zahnzulaufkanal einem Zahnzulaufkanalabschnitt umfasst, dass der der Zahnrücklaufkanal einen Zahnzulaufkanalabschnitt aufweist und dass optional der Zahnzwischenkanal einen Zahnzwischenkanalabschnitt umfasst.

Bei Wahl einer Dicke der Bleche von einigen Millimetern, vorzugsweise 5 mm bis 10 mm oder bei großen Blechpaketen 10 mm bis 30 mm, kann der Zahnzulaufkanalabschnitt, der Zahnrücklaufkanalabschnitt und/oder der Zahnzwischenkanalabschnitt bereits für ein Durchströmen des Kühlmediums ausreichend sein.

Weiter vorteilhaft trägt die erhöhte Dicke der Bleche zur vereinfachten Montage des Blechpakets und zur wirksamen Vermeidung von undichten Stellen in dem Blechpaket bei. Die Dicken Bleche können sich aus einer Mehrzahl dünneren Blechen wie in den o. g. Ensembles zusammensetzen, die fest miteinander befestigt, insbesondere verbacken, sind.

Bei einer weiteren vorteilhaften Ausgestaltung des Blechpakets weisen die Bleche eine unterschiedliche Dicke auf.

Möglich ist der Einsatz von Blechen einer erhöhten Dicke (Dicke einige Millimeter) in den Randbereichen des Blechpakets. Die Bleche einer erhöhten Dicke sind dort einzufügen, wo sich die Zahnzwischenkanäle, die Zahnzulaufkanäle und/oder Zahnrücklaufkanäle erstrecken. Durch die Ausgestaltung eines Kanals, bei der die Wände aus einem Blech bestehen oder nur wenigen Blechen bestehen, werden undichte Stellen wirksam verhindert.

Weiter vorteilhaft ist der Einsatz von dickeren Blechen in Bereichen des Blechpakets, in denen nur schwache magnetische Felder beim Einsatz des Blechpakets auftreten. So sind die Vorteile einer vereinfachten Fertigung des Blechpakets bei gleichzeitigem störungsarmem Betrieb gewährleistet.

Bei einer weiteren vorteilhaften Ausgestaltung des Blechpakets sind zumindest einer der Zulaufkanäle und/oder zumindest einer der Rücklaufkanäle zumindest bereichsweise an einer Au-ßenseite des Blechpakets lokalisiert.

Zumindest bereichsweise am äußeren Rand des Blechpakets verlaufende Zulaufkanäle und/oder Rücklaufkanäle sind vorteilhaft durch Einbuchtungen an der äußeren Mantelfläche des Blechpakets ausgeführt.

Durch diese Einbuchtungen können die Zulaufkanäle mit Kühlmedium versorgt werden. Durch die Einbuchtungen an den Rücklaufkanälen kann das Kühlmedium wieder aus dem Blechpaket entfernt werden. Das Kühlmedium kann an der Mantelfläche des Blechpakets zugeführt und/oder abgeführt werden. Besonders vorteilhaft ist diese Ausgestaltung, falls die Stirnbereiche des Blechpakets schon durch Spulenköpfe in ihrem Zugang eingeschränkt sind. An der Stirnseite kann ein Blechpaket daher vorteilhaft durch Zuflüsse und/oder Abflüsse für das Kühlmedium ergänzt werden.

Die Zulaufkanäle und/oder die Ablaufkanäle können auch vollständig durch Einbuchtungen in der Mantelfläche des Blechpakets ausgestaltet sein. Die Zulaufkanäle und/oder die Rücklaufkanäle sind durch eine Hülle, insbesondere das Gehäuse einer elektrischen Maschine, die das Blechpaket zumindest teilweise ummantelt, umschlossen. Das Kühlmedium kann dann durch Öffnungen in dem Gehäuse zugeführt und/oder rückgeführt werden.

Nach Einbau des Blechpakets in das Gehäuse sind die, von der Mantelfläche freiliegenden, Einbuchtungen abgedeckt. Durch die Einbuchtungen kann das Kühlmedium in die Kühlkanäle des Blechpakets eingeführt und/oder wieder ausgeführt werden.

Durch diese Ausgestaltung entsteht vorteilhaft ein vereinfachter Zugang zu den einzelnen Zulaufkanälen und den einzelnen Rücklaufkanäle. Besonders vorteilhaft kann ein Zugang über die gesamte Breite der Mantelfläche des Blechpakets erfolgen. Hierdurch ist eine besonders gleichmäßige Kühlung des Blechpakets möglich.

Bei einer weiteren vorteilhaften Ausführung des Blechpakets weist das Blechpaket eine Beschichtung an den Innenseiten der Zulaufkanäle, der Rücklaufkanäle, der Zahnzulaufkanäle, der Zahnrücklaufkanäle und/oder der Zahnzwischenkanäle auf.

Obgleich die einzelnen Bleche oder die einzelnen Blechsegmente fest im Blechpaket verbunden sind, kann Kühlmedium gegebenenfalls in Zwischenräume zwischen den Blechen oder Blechsegmenten eindringen. Insbesondere bei Verwendung von wasserhaltigen Kühlmedien kann das Kühlmedium zu Kurzschlüssen in der elektrischen Maschine führen. Um dieser Gefahr vorzubeugen, ist eine Beschichtung an die Außenseiten der Zulaufkanäle, der Rücklaufkanäle, der Zahnzwischenkanäle, der Zahnzulaufkanäle und/oder der Zahnrücklaufkanäle anbringbar. Bei der Beschichtung kann es sich um einen Kunststoff oder ein Harz handeln, welche auf die Außenflächen der o. g. Kanäle aufgebracht werden.

Eine elektrische Maschine wird während des Betriebs meist gekühlt. Ein Teil der Wärme wird dabei in einem Blechpaket der elektrischen Maschine erzeugt. Daher muss das Blechpaket zum Erhalt der Leistungsfähigkeit der elektrischen Maschine gekühlt werden.

Als Kühlmedium eignet sich Luft oder wasserhaltiges Lösemittel wie ein Glykol-Wassergemisch sowie flüssige Kohlenwasserstoffe, beispielsweise Mineralöl.

Beim Durchlauf des Kühlmediums durch das hier beschriebene Blechpaket nimmt das Kühlmedium vorteilhaft im Zahnbereich des Blechpakets die entstehende Wärme auf. Dabei bewegt sich das Kühlmediums vorteilhaft bereichsweise parallel zu den Spulen.

Da bei einem längeren parallelen Verlauf das Kühlmedium fortwährend Wärmeenergie aufnimmt, verbessert ein bereichsweise erfolgender Austausch des Kühlmediums durch eine Mehrzahl von Zahnzwischenkanälen die Kühlleistung.

Somit bewegt sich das Kühlmedium vorteilhaft parallel durch die Zahnzwischenkanäle und durch die Zahnrücklaufkanäle und durch die Rücklaufkanäle. Hierdurch kann eine Mehrzahl von axial ausgerichteten Zahnzwischenkanälen, insbesondere pro Zahn, die Kühlleistung stark verbessern.

Das Kühlmedium kann durch mehrere Zulaufkanäle und/oder aus mehreren Rücklaufkanälen parallel verlaufen. Das Kühlmedium kann aber auch erst einen Zulaufkanal eingeführt werden, durch einen Rücklaufkanal aus dem Blechpaket ausgeführt werden und wieder in zumindest einen Zugangskanal eingeführt werden. Je nach voraussichtlicher Wärmeentwicklung kann eine Kombination aus Parallel- und Reihenschaltung der Kanäle vorteilhaft sein.

Durch das hier vorgestellte Verfahren zur Kühlung eines Blechpakets kann die Leistungsdichte einer elektrischen Maschine mit einem erfindungsgemäßen Blechpaket erhöht werden. So kann eine elektrische Maschine mit kleineren Ausmaßen bei gleicher Leistung eingesetzt werden.

In einer vorteilhaften Ausgestaltung des Verfahrens strömt das Kühlmedium aus jeweils einem Zulaufkanal in eine Mehrzahl von Zahnzulaufkanälen und aus einer Mehrzahl von Zahnrücklaufkanälen in jeweils einen Rücklaufkanal.

Falls das Kühlmedium aus einem Zulaufkanal in mehrere Zahnzwischenkanäle (über jeweils einen Zahnzulaufkanal) strömt, erfolgt vorteilhaft eine verbesserte Kühlung einzelner Bereiche des Zahnbereiches durch die Zahnzwischenkanäle, die in axialer Richtung angeordnet sind.

In einer weiteren vorteilhaften Ausgestaltung des Blechpakets verfügt ein Zahn des Blechpakets über eine Mehrzahl von Zahnzwischenkanälen. Die Zahnzwischenkanäle sind jeweils mit einem Zahnzulaufkanal und einem Zahnrücklaufkanal verbunden. Zahnzulaufkanäle können auf einer Line nebeneinander angeordnet sein. Weiter können Zahnzwischenkanäle an radial unterschiedlichen Stellen durch den Zahn des Blechpakets verlaufen.

Zudem ist eine vorteilhafte Ausgestaltung des Verfahrens dergestalt ausgeführt, dass das Kühlmedium mit Hilfe von Sensoren und (Druck-) Ventilen dorthin verstärkt in die Bereiche fließt, in denen am meisten Wärme produziert wird.

Vorteilhaft können die Zahnzwischenkanäle, die Zahnzulaufkanäle und die Zahnrücklaufkanäle im Zahnbereich der Form der Zähne angepasst sein. Eine solche Anpassung erfolgt vorteilhaft dergestalt, dass der Abstand der Innenseite der entsprechenden Aussparung einen konstanten Abstand von der Außenseite des Bleches aufweist.

Weiter ist es vorteilhaft, die Aussparungen auf dem Blech oder dem Blechsegment so zu platzieren, dass Abstände zwischen der Innenseite der Aussparungen und/oder der Außenseite des Bleches, des Blechsegmentes oder des Blechpakets konstant sind. Hierdurch kann eine maximale Stabilität des Blechpakets erreicht werden.

Einsatzgebiete der Erfindung sind Blechpakete für elektrische Maschinen, Transformatoren, Elektromagnete oder Filter.

Im Folgenden wird die Erfindung anhand von Figuren näher beschrieben und erläutert. Die in den Figuren gezeigten Merkmale können vom Fachmann neu kombiniert werden, ohne den Rahmen der Erfindung zu verlassen.

Es zeigen:
- FIG 1: einen schematischen Plan der Kanäle,
- FIG 2: ein Blechsegment,
- FIG 3: einen Teil eines Blechpakets,
- FIG 4: ein Blechpaket,
- FIG 5: ein Blechsegment mit außen liegenden Zulaufkanalabschnitte sowie
- FIG 6: ein Blechpaket mit bereichsweise außen liegenden Zulaufkanälen.

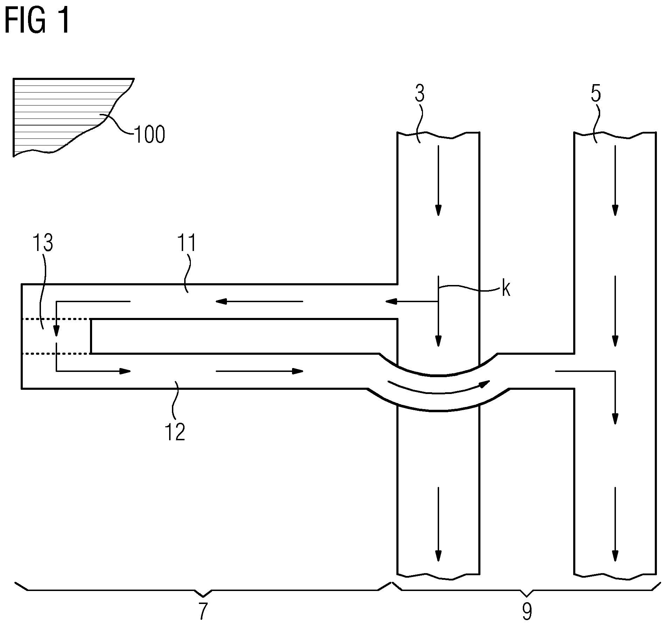

FIG 1 zeigt einen schematischen Verbindungsaufbau der Kanäle 3, 5, 11, 12, 13. Bei den Kanälen 3, 5, 11, 12, 13 handelt es sich um einen Zulaufkanal 3 und einen Rücklaufkanal 5. Der Zulaufkanal weist eine Abzweigung auf, von der ein Zahnzulaufkanal 11 abgeht. Der Zahnzulaufkanal 11 ist auf der einen Seite mit dem Zulaufkanal 3 verbunden. Auf der anderen Seite des Zahnzulaufkanals 11 ist dieser mit einem Zahnzwischenkanal 13 verbunden. Der Zahnzwischenkanal 13 ist dient als Verbindung zwischen dem Zahnzulaufkanal 11 und einem Zahnrücklaufkanal 12. Der Zahnrücklaufkanal 12 ist auf der einen Seite mit dem Zahnzwischenkanal 13 und auf der anderen Seite mit dem Rücklaufkanal 5 verbunden.
Links oben in der FIG 1 ist das Blechpaket 100, insbesondere in seiner Ausgestaltung, angedeutet.

Das Kühlmedium K teilt sich aus von dem Zulaufkanal 3 an der Abzweigung des Zahnzulaufkanals 11 in den Zulaufkanal 3 und den Zahnzulaufkanal 11 auf. Das in durch den Zulaufkanal 11 strömende Kühlmedium K durchläuft den Zahnzwischenkanal 13 und im Anschluss den Zahnrücklaufkanal 13. Aus dem Zahnrücklaufkanal 13 strömt das Kühlmedium K wieder in den Rücklaufkanal 5. Im Rücklaufkanal 5 vereinigt sich das Kühlmedium K aus dem Rücklaufkanal 5 und dem Zahnrücklaufkanal 12. Eine vorteilhafte Flussrichtung des Kühlmediums K wird durch Pfeile in den Kanälen 3, 5, 11, 12, 13 angezeigt.

Der Zahnzulaufkanal 11 und der Zahnrücklaufkanal 12 ist einem Zahnbereich 7 zugeordnet, das heißt, dass der Zahnzulaufkanal 11 und der Zahnrücklaufkanal 12 bereichsweise in den Zähnen eines Blechpakets 100 verlaufen.

Der Zulaufkanal 3 und der Rücklaufkanal 5 befinden sich im Jochbereich 9, insbesondere im äußeren Jochbereich 9, des Blechpakets 100.

Im Blechpaket 100 sind die Kanäle 3, 5, 11, 12, 13 so angeordnet, dass sich die Kanäle 3, 5, 11, 12, 13 nicht kreuzen oder berühren. Weiter sind bei einer tangential beabstandeten Anordnung des Zulaufkanals 3 und des Rücklaufkanals 5 im Jochbereich des Blechpakets 100 der Zahnzulaufkanal 11 und ein Zahnrücklaufkanal 12 ungefähr gleich lang ausgeführt.

In dieser Darstellung ist der Zahnzwischenkanal 13 nur als kurze Verbindung zwischen dem Zahnzulaufkanal 11 und dem Zahnrücklaufkanal 12 gezeigt. Je nach Blechpaket 100 kann der Zahnzwischenkanal 13 auch länger sein. Es können auch mehrere Zahnzwischenkanäle 13 aus einem Zahnzulaufkanal 11 gespeist werden. Ebenso kann ein Zahnrücklaufkanal 12 von mehreren Zahnzwischenkanäle 13 gespeist werden.

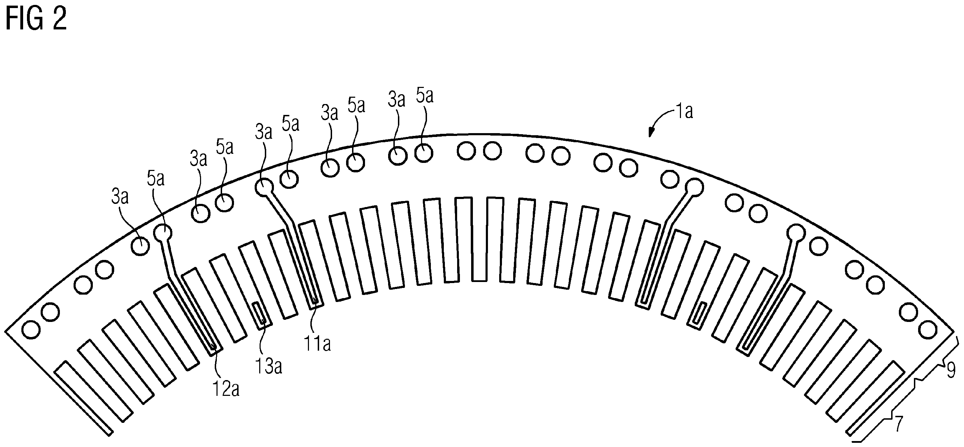

FIG 2 zeigt ein Blechsegment 1a. Das Blechsegment 1a weist einen Zahnbereich 7 auf, wobei der Zahnbereich der Bereich des Blechsegments 1a ist, der durch langgezogene rechteckige Ausschnitte Zähne hervorbringt. Das Blechsegment 1a weist weiter an seiner Außenseite einen Jochbereich 9, der auch als Außenjoch bezeichnet wird, auf. Im Jochbereich 9 weist das Blechsegment 1a Zulaufkanalabschnitte 3a und Rücklaufkanalabschnitte 5a auf. Jeweils ein Zulaufkanalabschnitt 3a ist einem Rücklaufkanalabschnitt 5a benachbart. Nahe der Außenseite des Jochbereichs 9 weist das Blechsegment 1a eine Vielzahl solcher Paare aus Zulaufkanalabschnitten 3a und Rücklaufkanalabschnitten 5a auf. Zwei der Zulaufkanalabschnitte 3a mündet seitlich in Zahnzulaufkanalabschnitte 11a, wobei die Zulaufkanalabschnitte 3a und die Zahnzulaufkanalabschnitte 11a eine gemeinsame Aussparung im Blechsegment 1a bilden.

Ebenso bildet ein Teil der Rücklaufkanalabschnitte 5a mit den entsprechenden Zahnrücklaufkanalabschnitten 12a eine gemeinsame Aussparung in dem Blechsegment 1a. Zwischen einem Zahnrücklaufkanalabschnitt 12a und einem Zahnzulaufkanalabschnitt 11a ist ein Zahnzwischenkanalabschnitt 13a angeordnet. Zwischen dem Zahnzulaufkanalabschnitt 11a und dem Zahnzwischenkanalabschnitt 13a als auch zwischen dem Zahnzwischenkanalabschnitt 13a und dem Zahnrücklaufkanalabschnitt 12a befindet sich jeweils ein Zahn, der keine Aussparung aufweist.

Das hier gezeigte Blechsegment 1a weist zwei solche Paare aus Zahnzulaufkanalabschnitt 11a und Zahnrücklaufkanalabschnitt 12a auf. Ein Blechpaket 100 weist in seinem Profil jeweils vier der hier gezeigten Blechsegmente 1a auf.

Das bedeutet, dass ein Blech 1, bestehend aus vier Blechsegmenten 1a acht Zahnzwischenkanalabschnitte 13a sowie acht Zahnzulaufkanalabschnitte 11a und acht Zahnrücklaufkanalabschnitte 12a aufweist. Weiter weist ein Blech 1 (als eine Schicht des Blechpakets 100), zusammengesetzt aus vier der gezeigten Blechsegmenten 1a, 60 Zulaufkanalabschnitte und 60 Rücklaufkanalabschnitte auf.

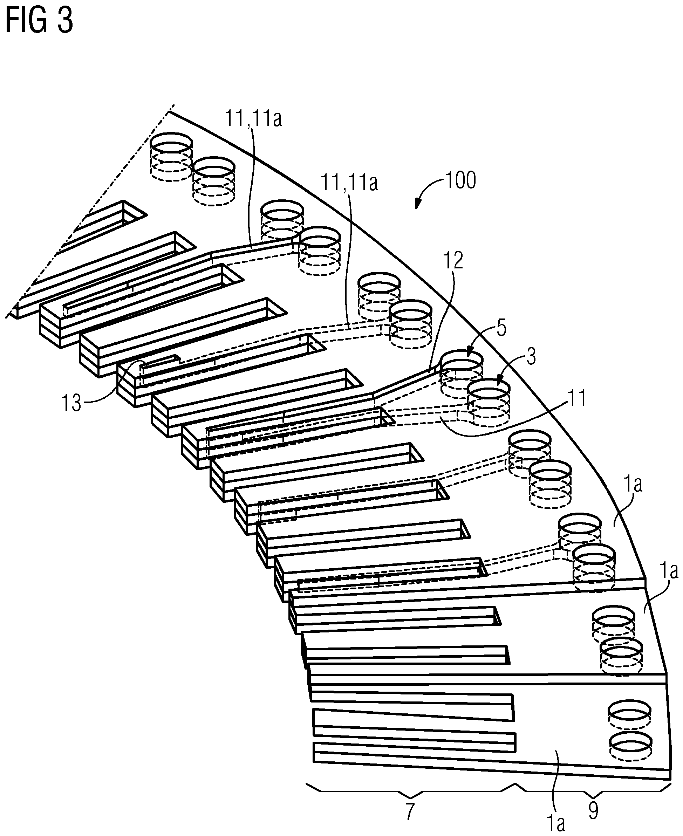

FIG 3 zeigt einen Teil eines Blechpakets 100. Das Blechpaket 100 ist aus mehreren Blechsegmenten 1a zusammengesetzt, wobei die Blechsegmente 1a jeweils rotationsversetzt aufeinander positioniert sind. Bei dem rotationsversetzten aufeinanderplatzieren der einzelnen Blechsegmente 1a liegen die Zähne im Zahnbereich 7 übereinander, so dass die rechteckigen Aussparungen beim fertigen Blechpaket langgezogene Spalten für die Magnetelemente (z. B. Spulen, nicht gezeigt) aufweisen. Im Jochbereich 9 der Blechsegmente 1a liegen die Blechsegmente 1a dergestalt aufeinander, dass die Zulaufkanalabschnitte 3a und die Rücklaufkanalabschnitte 5a jeweils einen Zulaufkanal 3 oder einen Rücklaufkanal 5 ausbilden.

Zur besseren Übersicht werden die Blechsegmente sehr dick dargestellt. Ein solches sehr dickes Blechsegment kann ein Ensemble aus mehreren Blechsegmenten 1a darstellen. Die Ensembles sind entsprechend der FIG 3 aufeinander angeordnet.

Die Blechsegmente 1a sind dabei so rotationsversetzt angeordnet, dass jeweils ein Zahnzulaufkanal 11 eines ersten Blechsegmentes 1a in einen Zahnzwischenkanal 13 des darüber liegenden Blechsegments 1a mündet. Das dritte Blechsegment 1a ist wiederum dergestalt angeordnet, dass sich der Zahnzwischenkanal 13 des zweiten Blechsegments eine Verbindung zum Zahnrücklaufkanal 12 des dritten Blechsegments 1a ausbildet.

Hier sind die Blechsegmente 1a sehr dick dargestellt. Regelmäßig umfasst ein Zahnzwischenkanal 13 eine Mehrzahl von Zahnzwischenkanalabschnitten 13a. Ein Blech 1 oder ein Blechsegment 1a weist gewöhnlich eine Dicke von etwa einem Millimeter auf. Daher besteht ein hier gezeigtes Blechsegment 1a aus einer Mehrzahl vor realen Blechsegmenten 1a, die eine Ensemble ausbildet. Die Blechsegmente 1a sind, gegebenenfalls deckungsgleich, aneinander befestigt. Die aneinander befestigten Blechsegmente 1a bilden ein solches Ensemble. Eine Mehrzahl der Ensembles bildet das Blechpaket 100 oder ein Teil eines Blechpakets 100 wie in FIG 3 gezeigt.

Ein Blechpaket 100 weist eine Mehrzahl der hier gezeigten Teile eines Blechpakets 100 auf, welche so angeordnet sind, dass die Bleche 1 oder die Blechsegmente 1a jeweils in der gleichen Art rotationsversetzt aufeinander aufgebracht sind.

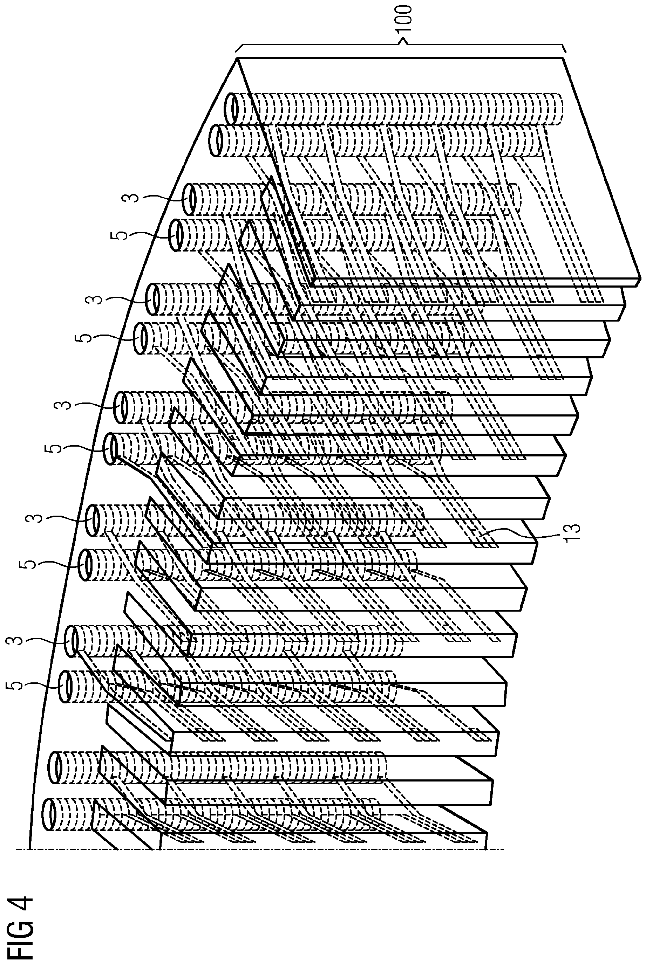

FIG 4 zeigt ein Blechpaket 100. Das gezeigte Blechpaket 100 weist eine Vielzahl von Blechsegmenten 1a oder Bleche 1 auf, wie sie in FIG 2 gezeigt sind. Die Bleche 1 und/oder die Blechsegmente 1a sind dabei analog der in FIG 3 gezeigten Ausführung aufeinander gefügt. Die Bleche 1 können durch äußere Spannkräfte und/oder durch eine Klebe- oder Backverbindung aneinander befestigt sein. Zur Verminderung der Gefahr eines Lecks in einem der Zulaufkanäle 3, Ablaufkanäle 5, Zahnzulaufkanäle 11, Zahnrücklaufkanäle 12 oder Zahnzwischenkanäle 13 ist vorteilhaft an der Innenseite der genannten Kanäle eine Beschichtung aufgebracht, die die Abstände der einzelnen Bleche 1 und/oder Blechsegmente 1a überdeckt. Eine solche Beschichtung der Innenseiten der Kanäle 3, 5, 11, 12, 13 kann durch ein Verbacken des Blechpakets fest mit dem Blechpaket 100 verbunden sein.

Das in der FIG 4 gezeigte Blechpaket weist hierbei eine Vielzahl von einzelnen Zahnzwischenkanälen 13 auf, die durch Zahnzulaufkanäle 11 (oder Zahnrücklaufkanäle 12) mit denen nahe der Außenseite des Blechpakets 100 angeordneten Zulaufkanäle 3 (oder Rücklaufkanäle 5) verbunden sind. Durch die hier gezeigte Anordnung ist eine besonders wirksame und gleichmäßige Kühlung des Blechpakets 100 möglich.

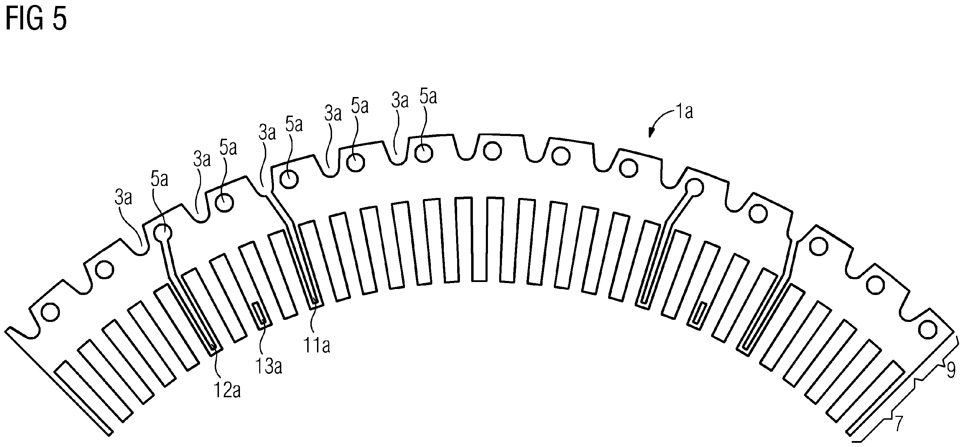

FIG 5 zeigt ein Blechsegment 1a mit außen liegenden Zulaufkanalabschnitte 3a. Hierbei sind die Zulaufkanalabschnitte 3a an der Außenseite des Jochbereichs 9 des Blechsegments 1a angeordnet. Das heißt, dass die Zulaufkanalabschnitte 3a an der Mantelfläche des Blechpakets 100 angeordnet sind. Die Zulaufkanalabschnitte 3a entsprechen den Zulaufkanalabschnitten 3 des Blechsegments 1a, das in FIG 2 abgebildet ist. Im Unterschied zu dem Blechsegment 1a aus FIG 2 sind die Zulaufkanäle als Einbuchtungen in das Blechsegment 1a dergestalt eingefügt, so dass eine Außenseite der Zulaufkanalabschnitte 3a durch das Material, welches das Blechpaket 100 bzw. das Blechsegment 1a nach seinem Einbau umgibt oder zumindest bereichsweise umschließt, als Abgrenzung für die Zulaufkanalabschnitte 3a dient. Die hier gezeigten Blechsegmente 1a können bereichsweise in ein Blechpaket 100 dergestalt eingebaut werden, dass die nach außen offen liegenden Zulaufkanäle von der Außenseite des Blechpakets zugänglich sind. Die nach außen offenen Zulaufkanäle 3 können von Blechen 1 oder Blechsegmenten 1a, wie sie in FIG 2 gezeigt sind, umgeben sein, so dass nur ein bereichsweise Zugang der Zulaufkanäle 3a im Blechpaket 100 an der Mantelfläche des Blechpakets 100 vorliegt.

Ebenso ist es möglich, dass die Rücklaufkanalabschnitte 5a an der Außenseite des Blechsegments 1a durch Einbuchtungen ausgeführt sind. Insbesondere können sowohl die Zulaufkanalabschnitte 3a und die Rücklaufkanalabschnitte 5a an der Außenseite des Blechsegments 1a angeordnet sind. Mit solchen Blechsegmenten 1a kann ein Blechpaket 100 bereitgestellt werden, bei dem sowohl die Zulaufkanäle 3 als auch die Rücklaufkanäle 5 von der Mantelfläche des Blechpakets 100 zugänglich sind.

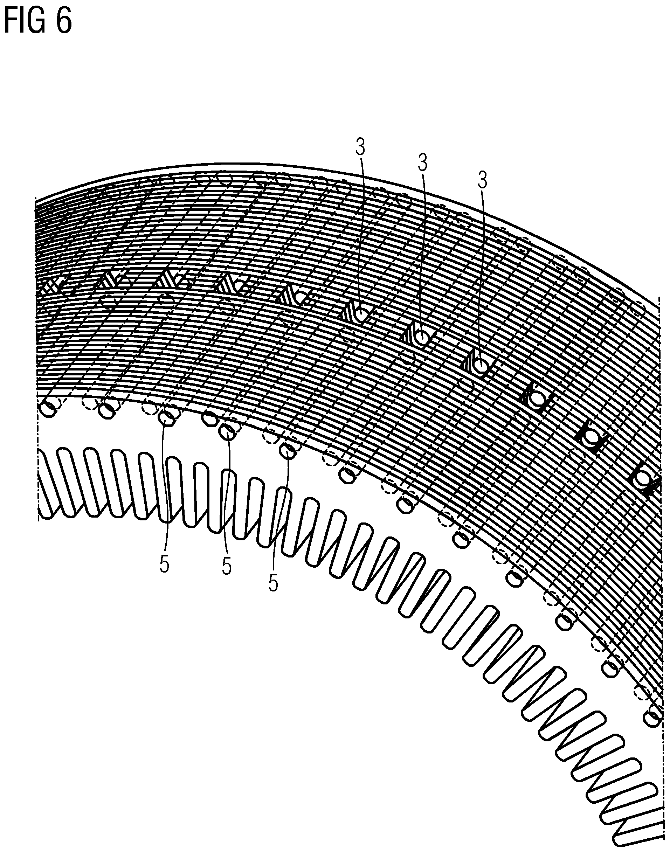

FIG 6 zeigt ein Blechpaket 100 mit bereichsweise außen liegenden Zulaufkanälen 3. Die nach außen offenen (Zulauflaufkanalabschnitte 5a sind in einem Mittelbereich der Mantelfläche des Blechpakets 100 so angeordnet, dass das Blechpaket 100 von der Außenseite mit dem Kühlmedium K beaufschlagt werden kann. Die Rücklaufkanäle 5 enden jeweils an den Profilseiten des Blechpakets 100 und können entweder über Verbindungsleitungen miteinander verknüpft sein (nicht gezeigt) und/oder jeweils ein Ausgang für das Kühlmedium K sein.

Ebenso ist es möglich, dass nicht nur die Zulaufkanalabschnitte 3a sondern (auch) die Rücklaufkanalabschnitte 5a an der Außenseite des Blechsegmentes 1a oder, zumindest bereichsweise, an der Mantelfläche des Blechpakets 100 lokalisiert sind.

Zusammenfassend betrifft die Erfindung ein Blechpaket 100, einen Rotor, einen Stator sowie eine elektrische Maschine sowie ein Verfahren zur Kühlung eines Blechpakets 100. Das Blechpaket 100 besteht aus Blechen 1 oder Blechsegmenten 1a. Die Bleche 1 oder die Blechsegmente 1a weisen Aussparungen 3a, 5a, 11a, 12a, 13a auf, wobei die Aussparungen 3a, 5a, 11a, 12a, 13a nach dem Zusammenfügen der Bleche 1 bzw. Blechsegmente 1a zu dem Blechpaket 100 Kanäle für das Kühlmedium K bilden. Kennzeichnend für die Kanäle 3, 5, 11, 12, 13 ist, dass in einem Jochbereich 9 des Blechpakets 100 Zulaufkanäle und Rücklaufkanäle 5 aus den Aussparungen gebildet sind, dass Weitere Kanäle 11, 12, 13 parallelgeschaltet zu den Zulauf- und Rücklaufkanälen 3, 5 verlaufen und dass die weiteren Kanäle 11, 12, 13 im Bereich der Zähne des Blechpakets 100 lokalisiert sind. Durch die Erfindung kann der Innenbereich des Blechpakets 100 direkt gekühlt werden und durch den Aufbau aus jeweils gleichen Blech(-Segmenten) 1, 1a kann die Fertigung stark vergünstigt werden, indem die gleichen Blech (-segmente) 1, 1a rotatorisch-versetzt aufeinander befestigt werden.

## Patentansprüche

1. Blechpaket (100), insbesondere ein Blechpaket (100) eines Rotors oder Stators einer elektrischen Maschine, aufweisend eine Vielzahl von gleichen Blechen (1), wobei die Bleche (1) Aussparungen (3a, 5a, 11a, 12a, 13a) zum Transport eines Kühlmediums (K) durch das Blechpaket (100) aufweisen, wobei Zulaufkanalabschnitte (3a), Rücklaufkanalabschnitte (5a), Zahnzulaufkanalabschnitte (11a), Zahnzwischenkanalabschnitte (13a) und Zahnrücklaufkanalabschnitte (12a) Aussparungen (3a, 5a, 11a, 12a, 13a) sind, wobei die Bleche (1) dergestalt zum Blechpaket (100) zusammengefügt sind:
- dass der wenigstens eine Zulaufkanalabschnitt (3a) jeweils einen Zulaufkanal (3) bildet,
- dass der wenigstens eine Rücklaufkanalabschnitt (5a) einen Rücklaufkanal (5) bildet,
- wobei die Aussparungen (3a, 5a, 11a, 12a, 13a) dergestalt übereinander liegen,
- dass der wenigstens eine Zahnzulaufkanalabschnitt (11a) jeweils einen Zahnzulaufkanal (11) bildet,
- dass der wenigstens eine Zahnrücklaufkanalabschnitt (12a) jeweils einen Zahnrücklaufkanal (12) bildet,
- dass der wenigstens eine Zahnzwischenkanalabschnitt (13a) jeweils einen Zahnzwischenkanal (13) bildet,
wobei der wenigstens eine Zulaufkanal (3) in zumindest einen Zahnzulaufkanal (11) mündet,
wobei der wenigstens eine Zahnzulaufkanal (11) jeweils in den Zahnzwischenkanal (13) und/oder einen Zahnrücklaufkanal (12) mündet,
wobei der Zahnzwischenkanal (13) und/oder der Zahnzulaufkanal (11) in den Zahnrücklaufkanal (12) münden,
wobei der Zahnrücklaufkanal (12) in den Rücklaufkanal (5) mündet, wobei der Zulaufkanal (3) und der Rücklaufkanal (5) und optional der Zahnzwischenkanal (13) axial durch das Blechpaket (100) angeordnet sind.

2. Blechpaket (100) nach Anspruch 1, wobei die Zahnzulaufkanäle (11) und die Zahnrücklaufkanäle (12) zumindest teilweise in radialer Richtung angeordnet sind.

3. Blechpaket (100) nach einem der vorangehenden Ansprüche, wobei die Zulaufkanäle (3) und/oder die Rücklaufkanäle (5) parallel angeordnet sind.

4. Blechpaket nach einem der vorangehenden Ansprüche, wobei das Blechpaket (100) Zahnbereiche (7) aufweist, wobei die Zahnzulaufkanäle (11), die Zahnrücklaufkanäle (12) sowie optional die Zahnzwischenkanäle (13) zumindest bereichsweise in den Zahnbereichen (7) lokalisiert sind.

5. Blechpaket (100) nach einem der vorangehenden Ansprüche, wobei das Blechpaket (100) einen Jochbereich (9) aufweist, wobei die Zulaufkanäle (3) und die Rücklaufkanäle (5) in dem Jochbereich (9) lokalisiert sind.

6. Blechpaket nach einem der vorangehenden Ansprüche, wobei die Dicke der Bleche (1) so gewählt ist, dass der Zahnzulaufkanal (11) einen Zahnzulaufkanalabschnitt (11a) umfasst, dass der der Zahnrücklaufkanal (12) einen Zahnrücklaufkanalabschnitt (12a) aufweist und dass optional der Zahnzwischenkanal (13) einen Zahnzwischenkanalabschnitt (13a) umfasst.

7. Blechpaket nach einem der vorangehenden Ansprüche, wobei die Bleche (1) eine unterschiedliche Dicke aufweisen.

8. Blechpaket (100) nach einem der vorangehenden Ansprüche, wobei zumindest einer der Zulaufkanäle (3) und/oder zumindest einer der Rücklaufkanäle (5) zumindest bereichsweise an einer Außenseite des Blechpakets (100) lokalisiert sind.

9. Blechpaket (100) nach einem der vorangehenden Ansprüche, weiter aufweisend eine Beschichtung an den Innenseite der Zulaufkanäle (3), der Rücklaufkanäle (5), der Zahnzulaufkanäle (11), der Zahnrücklaufkanäle (12) und/oder der Zahnzwischenkanäle (13).

10. Verfahren zur Kühlung eines Blechpakets (100), insbesondere einem Blechpaket (100) einer elektrischen Maschine, wobei ein Kühlmedium (K) ein Blechpaket (100) gemäß einem der vorangehenden Ansprüche durchläuft, wobei das Kühlmedium (K) von dem Zulaufkanal (3) über den zumindest einen Zahnzulaufkanal (11) in den entsprechenden Zahnzwischenkanal (13) und weiter über den entsprechenden Zahnrücklaufkanal (12) in den Rücklaufkanal (5) strömt.

11. Verfahren nach Anspruch 10, wobei das Kühlmedium (K) aus jeweils einem Zulaufkanal (3) in eine Mehrzahl von Zahnzulaufkanälen (11) strömt und aus einer Mehrzahl von Zahnrücklaufkanälen (12) in jeweils einen Rücklaufkanal (5) strömt.

12. Rotor oder Stator, aufweisend ein Blechpaket (100) nach einem der Ansprüche 1 bis 9.

13. Elektrische Maschine, aufweisend ein Blechpaket (100) nach einem der Ansprüche 1 bis 9.

## Claims

1. Stack of metal sheets (100), in particular a stack of metal sheets (100) of a rotor or stator of an electric machine, having a plurality of identical metal sheets (1), wherein the metal sheets (1) have recesses (3a, 5a, 11a, 12a, 13a) for transporting a coolant (K) through the stack of metal sheets (100), wherein intake channel sections (3a), return channel sections (5a), tooth intake channel sections (11a), tooth intermediate channel sections (13a) and tooth return channel sections (12a) are recesses (3a, 5a, 11a, 12a, 13a), wherein the metal sheets (1) are joined together to form the stack of metal sheets (100) such that:
- the at least one intake channel section (3a) in each case forms an intake channel (3),
- the at least one return channel section (5a) in each case forms a return channel (5),
- wherein the recesses (3a, 5a, 11a, 12a, 13a) lie one above the other such that
- the at least one tooth intake channel section (11a) in each case forms a tooth intake channel (11),
- the at least one tooth return channel section (12a) in each case forms a tooth return channel (12),
- the at least one tooth intermediate channel section (13a) in each case forms a tooth intermediate channel (13),
wherein the at least one intake channel (3) opens into at least one tooth intake channel (11),
wherein the at least one tooth intake channel (11) opens in each case into the tooth intermediate channel (13) and/or a tooth return channel (12),
wherein the tooth intermediate channel (13) and/or the tooth intake channel (11) open into the tooth return channel (12),
wherein the tooth return channel (12) opens into the return channel (5), wherein the intake channel (3) and the return channel (5) and optionally the tooth intermediate channel (13) are axially arranged through the stack of metal sheets (100).

2. Stack of metal sheets (100) according to claim 1, wherein the tooth intake channels (11) and the tooth return channels (12) are at least partially arranged in the radial direction.

3. Stack of metal sheets (100) according to one of the preceding claims, wherein the intake channels (3) and/or the return channels (5) are arranged in parallel.

4. Stack of metal sheets according to one of the preceding claims, wherein the stack of metal sheets (100) has tooth regions (7), wherein the tooth intake channels (11), the tooth return channels (12) and optionally the tooth intermediate channels (13) are located at least partially in the tooth regions (7).

5. Stack of metal sheets (100) according to one of the preceding claims, wherein the stack of metal sheets (100) has a yoke region (9), wherein the intake channels (3) and the return channels (5) are located in the yoke region (9).

6. Stack of metal sheets according to one of the preceding claims, wherein the thickness of the metal sheets (1) is selected such that the tooth intake channel (11) comprises a tooth intake channel section (11a), that the tooth return channel (12) has a tooth return channel section (12a) and that optionally the tooth intermediate channel (13) comprises a tooth intermediate channel section (13a).

7. Stack of metal sheets according to one of the preceding claims, wherein the metal sheets (1) have a heterogeneous thickness.

8. Stack of metal sheets (100) according to one of the preceding claims, wherein at least one of the intake channels (3) and/or at least one of the return channels (5) are located at least partially on an outer side of the stack of metal sheets (100).

9. Stack of metal sheets (100) according to one of the preceding claims, further having a coating on the inside of the intake channels (3), the return channels (5), the tooth intake channels (11), the tooth return channels (12) and/or the tooth intermediate channels (13).

10. Method for cooling a stack of metal sheets (100), in particular a stack of metal sheets (100) of an electric machine, wherein a coolant (K) flows through a stack of metal sheets (100) according to one of the preceding claims, wherein the coolant (K) flows from the intake channel (3) via the at least one tooth intake channel (11) into the corresponding tooth intermediate channel (13) and further via the corresponding tooth return channel (12) into the return channel (5).

11. Method according to claim 10, wherein the coolant (K) flows in each case from an intake channel (3) into a plurality of tooth intake channels (11) and from a plurality of tooth return channels (12) into a return channel (5) in each case.

12. Rotor or stator, having a stack of metal sheets (100) according to one of claims 1 to 9.

13. Electric machine, having a stack of metal sheets (100) according to one of claims 1 to 9.

## Revendications

1. Paquet (100) de tôles, notamment paquet (100) de tôles d'un rotor ou d'un stator d'une machine électrique, comportant une pluralité de mêmes tôles (1), les tôles (1) ayant des évidements (3a, 5a, 11a, 12a, 13a) de transport d'un fluide (K) réfrigérant dans le paquet (100) de tôles, dans lequel des tronçons (3a) de conduit d'entrée, des tronçons (5a) de conduit de retour, des tronçons (11a) de conduit d'entrée dentés, des tronçons (13a) de conduit intermédiaire dentés et des tronçons (12a) de conduit de retour dentés sont des évidements (3a, 5a, 11a, 12a, 13a), les tôles (1) étant assemblées en le paquet (100) de tôles, de manière :
- à ce que le au moins un tronçon (3a) de conduit d'entrée forme respectivement un conduit (3a) d'entrée,
- à ce que le au moins un tronçon (5a) de conduit de retour forme respectivement un conduit (5) de retour,
- dans lequel les évidements (3a, 5a, 11a, 12a, 13a) sont superposés de manière :
- à ce que le au moins un tronçon (11a) de conduit d'entrée denté forme respectivement un conduit (11) d'entrée denté,
- à ce que le au moins un tronçon (12a) de conduit de retour denté forme respectivement un conduit (12) de retour denté,
- à ce que le au moins un tronçon (13a) de conduit intermédiaire denté forme respectivement un conduit (12) intermédiaire denté,
dans lequel le au moins un conduit (3) d'entrée débouche dans au moins un conduit (11) d'entrée denté,
dans lequel le au moins un conduit (11) d'entrée denté débouche respectivement dans le conduit (13) intermédiaire denté et/ou un conduit (12) de retour denté,
dans lequel le conduit (13) intermédiaire denté et/ou le conduit (11) d'entrée denté débouche dans le conduit (12) de retour denté,
dans lequel le conduit (12) de retour denté débouche dans le conduit (5) de retour, le conduit (3) d'entrée et le conduit (5) de retour et, facultativement, le conduit (13) intermédiaire denté étant disposés axialement dans le paquet (100) de tôles.

2. Paquet (100) de tôles suivant la revendication 1, dans lequel les conduits (11) d'entrée dentés et les conduits (12) de retour dentés sont disposés, au moins en partie, dans la direction radiale.

3. Paquet (100) de tôles suivant l'une des revendications précédentes, dans lequel les conduits (3) d'entrée et/ou les conduits (5) de retour sont disposés de manière parallèle.

4. Paquet (100) de tôles suivant l'une des revendications précédentes, dans lequel le paquet (100) de tôles a des régions (7) dentées, les conduits (11) d'entrée dentés, les conduits (12) de retour dentés, ainsi que, facultativement, les conduits (12) intermédiaires dentés étant localisés, au moins par endroit, dans les régions (7) dentées.

5. Paquet (100) de tôles suivant l'une des revendications précédentes, dans lequel le paquet (100) de tôles a une région (9) de culasse, les canaux (3) d'entrée et les canaux (5) de retour étant localisés dans la région (9) de culasse.

6. Paquet (100) de tôles suivant l'une des revendications précédentes, dans lequel l'épaisseur des tôles (1) est choisie de manière à ce que le conduit (11) d'entrée denté comprenne un tronçon (11a) de conduit d'entrée denté, de manière à ce que le conduit (12) de retour denté ait un tronçon (12a) de conduit de retour denté et de manière à ce que, éventuellement, le conduit (13) intermédiaire denté comprenne un tronçon (13a) de conduit intermédiaire denté.

7. Paquet (100) de tôles suivant l'une des revendications précédentes, dans lequel les tôles (1) ont une épaisseur différente.

8. Paquet (100) de tôles suivant l'une des revendications précédentes, dans lequel au moins l'un des conduits (3) d'entrée et/ou au moins l'un des conduits (5) de retour est localisé, au moins par endroit, sur un côté extérieur du paquet (100) de tôles.

9. Paquet (100) de tôles suivant l'une des revendications précédentes, comportant, en outre, un revêtement du côté intérieur des conduits (3) d'entrée, des conduits (5) de retour, des conduits (11) d'entrée dentés, des conduits (12) de retour dentés et/ou des conduits (13) intermédiaires dentés.

10. Procédé de refroidissement d'un paquet (100) de tôles, notamment d'un paquet (100) de tôles d'une machine électrique, dans lequel un fluide (K) réfrigérant traverse un paquet (100) de tôles suivant l'une des revendications précédentes, dans lequel le fluide (K) réfrigérant passe du conduit (3) d'entrée, en passant par le au moins un conduit (11) d'entrée denté, dans le conduit (13) intermédiaire denté correspondant et, en outre, en passant par le conduit (12) de retour denté correspondant, dans le conduit (5) de retour.

11. Procédé suivant la revendication 10, dans lequel le fluide (K) réfrigérant passe d'un conduit (3) d'entrée dans une pluralité de conduits (11) d'entrée dentés et, à partir d'une pluralité de conduits (12) de retour dentés, dans respectivement un conduit (5) de retour.

12. Rotor ou stator ayant un paquet (100) de tôles suivant l'une des revendications 1 à 9.

13. Machine électrique ayant un paquet (100) de tôles suivant l'une des revendications 1 à 9.
